# EUROPEAN PATENT SPECIFICATION

(11) **EP 1 162 714 B1**
(45) Date of publication and mention of the grant of the patent: **07.05.2008**
(21) Application number: 01111993.0
(22) Date of filing: 22.05.2001
(51) Int. Cl.: H02K 3/52, H01F 5/04

(54) **Bobbin for electrical windings of motors**
Spule für elektrische Wicklungen von Motoren
Bobine pour enroulements électriques de moteur

(30) Priority: 05.06.2000 IT PD000152
(43) Date of publication of application: 12.12.2001
(73) Proprietor: Inarca S.p.A., 35010 Vigodarzere (PD) (IT)
(72) Inventor: Boischio, Ido, 35100 Padova (IT)
(74) Representative: Modiano, Micaela Nadia

(56) References cited:
- EP-A- 0 207 386
- DE-A- 19 617 325
- DE-B- 1 564 607
- US-A- 5 541 461

## Description

The present invention relates to a bobbin for electrical windings of motors. Document EP-A-0 207 386 discloses a bobbin according to the prior art.

It is known that electric induction motors have a magnetic core with which an electrical winding is associated; current flows through such winding.

Small motors, particularly those currently used in electrical household appliances such as washing machines and dishwashers, use U-shaped magnetic cores, on each wing of which a separate bobbin is placed on which an electrical conductor being wound beforehand thereon.

In order to facilitate the operations for winding the electrical conductor and for assembly on the U-shaped magnetic core, a bobbin has been provided being constituted by two half-bobbins on which each wing of the core is to be fitted; the half-bobbins are made of plastics and are associated one another by means of a flexible hinge element which joins corresponding longitudinal perimetric edges of two of the heads.

The electrical connections are usually provided on the other pair of heads. Currently, for each type of motor, connection or coupling, bobbins are provided having dedicated seats for the electrical connection terminals.

This means that different molds are to be provided for bobbins which differ from each other as regards the types of electrical connection.

This clearly affects the management of the production and inventory of the finished product.

Moreover, other drawbacks occur in the assembly of the terminals and of the electrical connections.

The aim of the present invention is to provide an improved bobbin for electrical windings of motors which solves the technical problems noted above in conventional bobbins.

Within this aim, an object of the present invention is to facilitate management of the production and inventory of bobbins and the assembly of the components on the bobbins.

Another object is to reduce production costs.

Another object is to reduce the number of components needed to meet customers requirements.

This aim and these and other objects which will become better apparent hereinafter are achieved by a bobbin for electrical windings of motors, comprising two half-bobbins made of plastics which are operatively associated one another in a side-by-side configuration, characterized in that at the edge of two heads of said half-bobbins that are arranged side by side, a first, a second and a third block protrude; said first block being in a middle position and having two parallel seats for respective female electric connection elements, on one side of said first block the second block being provided which has two side-by-side seats for respective female electric connection elements, on the other side of said first block the third block being provided which has a seat for a female electric connection element.

Further characteristics and advantages of the invention will become better apparent from the following detailed description of the bobbin according to the invention in some operative configurations of the electrical connections, illustrated only by way of non-limitative example in the accompanying drawings, wherein:
Figure 1 is a perspective view of the bobbin according to the invention;
Figure 2 is a perspective view of a first cover;
Figure 3 is a front view of the bobbin of Figure 1 in a first electrical connection configuration, assembled in a stator;
Figure 4 is a top view of the bobbin of Figure 1 in the first electrical connection configuration;
Figure 5 is a front view of the bobbin of Figure 1 in a second electrical connection configuration, assembled in a stator;
Figure 6 is a top view of the bobbin of Figure 1 in the second electrical connection configuration;
Figure 7 is a perspective view of a second cover;
Figure 8 is a front view of the bobbin of Figure 1 in a third electrical connection configuration, assembled in a stator;
Figure 9 is a top view of the bobbin of Figure 1 in the third electrical connection configuration.

With reference to the figures, a bobbin according to the invention is composed of two half-bobbins made of plastics, designated by the reference numerals 10 and 11 respectively, which are associated one another by means of a flexible hinge 12 which joins corresponding longitudinal perimetric edges of two first heads 13 and 14 of the half-bobbins.

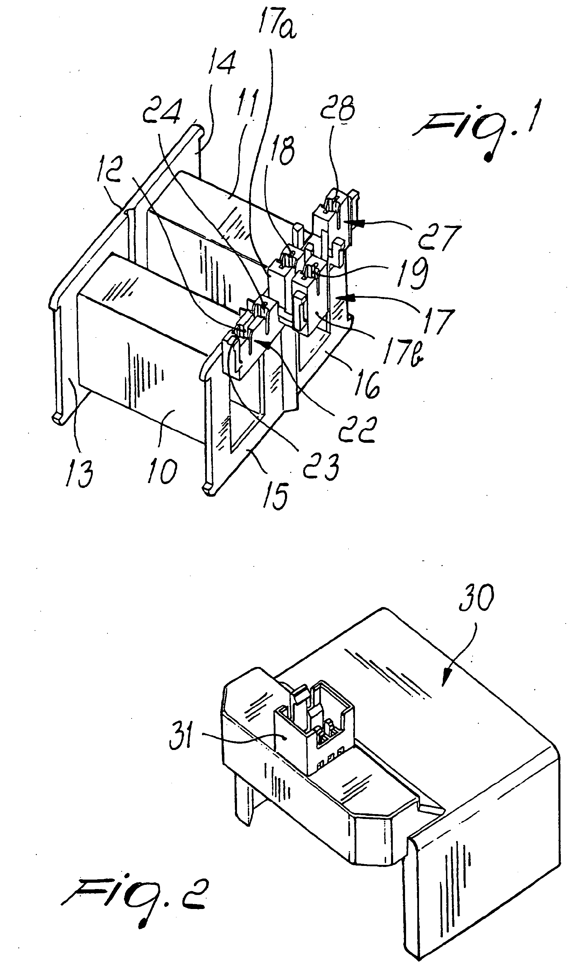

The two half-bobbins 10 and 11 are operatively arranged side by side, as shown in particular in Figure 1.

According to the invention, a first block 17 lies in a central position at the edge of two second heads 15 and 16 that lie opposite the first heads 13 and 14 joined by means of the flexible hinge 12; block 17 has two parallel seats 18 and 19 for respective female elements, only one of which designated by the reference numeral 20 is visible in the figures, for connection to corresponding male terminals of the RS or PIN types.

The first block 17 is composed of two half-blocks 17a and 17b, one of which is monolithic with the head 15 and the other one is monolithic with the head 16.

Laterally of the first block 17, on one side there is a second block 22 (which is monolithic with the head 15) with two side-by-side seats 23 and 24 for respective female elements 25 and 26 (which are mutually monolithic) for connection to corresponding male terminals of the RS type.

The second block 22 conveniently ends at a lower level than the first block 17, since it is used for the connection of a thermal protection device which is not shown in the figures but is of a per se known type.

On the other side of the first block 17 there is a third block 27 (which is monolithic with head 16), provided with a seat 28 for a female element 29 for electrical connection to a corresponding male terminal of the RS type.

The third block 27 ends, in an upward region, at the same level as the first block 17.

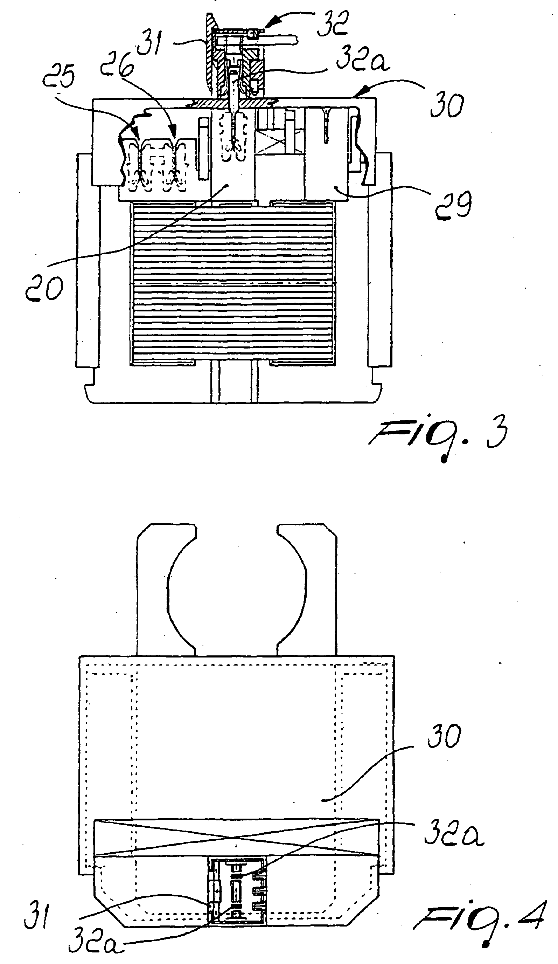

The bobbin according to the invention allows three electrical connection configurations: a first one (Figures 3 and 4) provides for the upper closure of the blocks and of the bobbin by means of a first cover 30 which has, in its central region, a shell 31 for accommodating for example a connector 32 of the RAST 2.5 type for connection, by means of terminals 32a of the RS PIN type, to the female elements of the first block 17.

Contact occurs along the width of each PIN terminal 32a (between the farthest edges) rather than along the thickness, as usually occurs, so that the connector 32 is rotated through 90° with respect to its normal connection uses.

The first cover 30 encloses the other blocks.

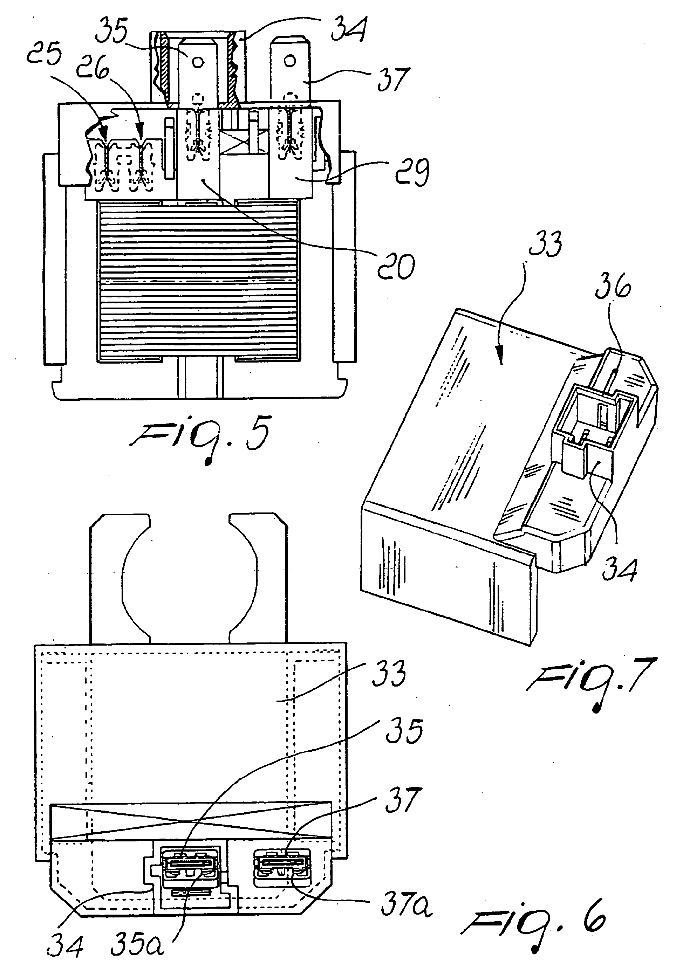

In a second connection configuration (Figures 5 and 6) a second cover 33 is provided which has, in a central region, a shell 34 (of the RAST/5) type for accommodating, in this case, a male terminal 35 of the RS type for connection to the female element 20 of the first block 17.

The male terminal is further adapted for the connection of an encapsulated female terminal 35a.

Likewise, a hole 36 is provided laterally for a male terminal 37 for connection to the female element 29 of the third block 27.

Connection occurs in an upward region with an encapsulated female terminal 37a.

The cover fully encloses internally the second block 22.

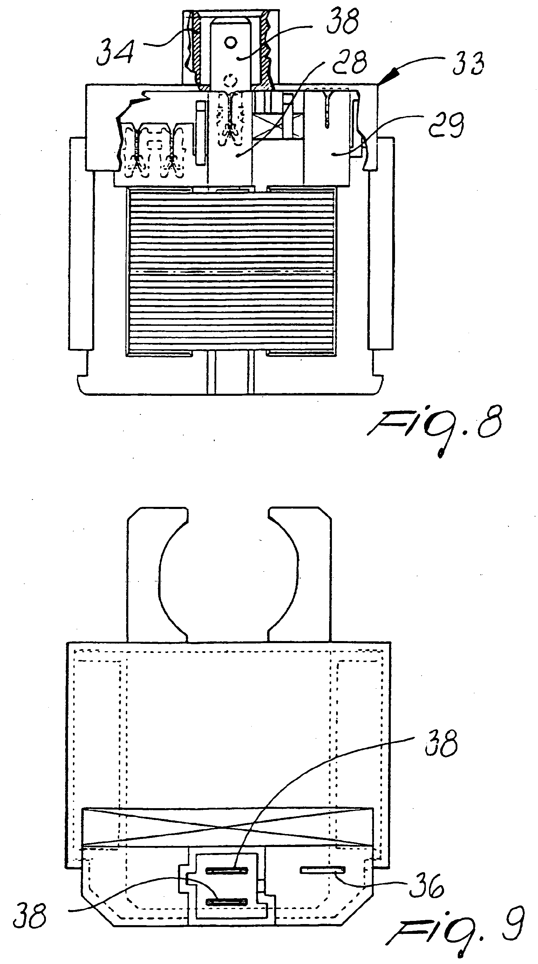

In a third configuration connection (Figures 8 and 9), the second cover 33 is used, connecting only two male terminals 38 of the RS type on the first block 17.

In practice it has been observed that the intended aim and objects of the present invention have been achieved.

In fact with a single bobbin it is possible, simply by changing two covers, to provide three types of technical connection, which are the types presently used in the various commercially available motor configurations.

The bobbin in a single configuration, with a single type of mold, allows a much simpler production and inventory management than at present.

Moreover, the presence of only two covers for the different types of connection considerably simplifies the assembly and fitting operations.

The invention thus conceived is susceptible of numerous modifications and variations, all of which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bobbin for electrical windings of motors, comprising two half-bobbins (10,11) made of plastics which are operatively associated one another in a side-by-side configuration, **characterized in that** at the edge of two heads (13,14) of said half-bobbins (10,11) that are arranged side by side, a first (17), a second (22) and a third (27) block protrude; said first block (17) being in a middle position and having two parallel seats (18,19) for respective female electric connection elements (20), on one side of said first block (17) the second block (22) being provided which has two side-by side seats (23,24) for respective female electric connection elements (25,26), on the other side of said first block (17) the third block (27) being provided which has a seat (28) for a female electric connection element (29).

2. The bobbin according to claim 1, **characterized in that** said first block (17) is composed of two half-blocks, (17a,17b) one of which is monolithic with one head (15) and the other one is monolithic with the other head (16).

3. The bobbin according to claim 1, **characterized in that** said second block (22) ends at a lower level than the first block (17) and the third block (27).

4. A cover for a bobbin according to one or more of the preceding claims, **characterized in that** it has, in a central region, a shell (31) for accommodating a male connector (32) of the RAST/2.5 and RAST/5 type for connection, by means of male terminals (32a), to the female elements of said first block (17), said cover (30) internally enclosing the said second (22) and third blocks (27).

5. The cover according to claim 4, **characterized in that** said male terminals (32a) are parallel to said heads.

6. The cover according to claims 4 and 5, **characterized in that** the shell (31) of said male connector (32) is arranged, with respect to the arrangement of said male terminals (32a), being PIN terminals (32a), so as to guide the electrical connection so that it occurs along the width (between the furthest edges) of each PIN terminal (32a).

7. The cover according to claim 4, **characterized in that** it has, in a central region, a shell (34) for accommodating male terminals (35) of the RS type for connection to the female elements (20) of the first block (17), a hole (36) being provided laterally for a male terminal (37) of the RS type for connection to the female terminal (29) of the third block (27), said second block (22) being completely enclosed.

8. The cover according to claim 7, **characterized in that** said male terminals (35) are arranged parallel to said heads.

## Patentansprüche

1. Eine Spule für elektrische Wicklungen von Motoren, die zwei halbe Spulen (10, 11) aus Kunststoff umfasst, welche operativ miteinander verbunden sind und nebeneinander angeordnet sind, **dadurch gekennzeichnet, dass** an der Kante zweier Köpfe (13, 14) der halben Spulen (10, 11), die nebeneinander angeordnet sind, ein erster (17), ein zweiter (22) und ein dritter (27) Block herausragen, wobei sich der erste Block (17) in einer mittleren Position befindet und zwei parallele Sitze (18, 19) für entsprechende elektrische Buchsensteckelemente (20) hat, wobei auf einer Seite des ersten Blocks (17) der zweite Block (22) bereitgestellt wird, der zwei nebeneinander angeordnete Sitze (23, 24) für entsprechende elektrische Buchsensteckelemente (25, 26) hat, wobei auf der anderen Seite des ersten Blocks (17) der dritte Block (27) bereitgestellt wird, der einen Sitz (28) für ein elektrisches Buchsensteckelement (29) hat.

2. Die Spule gemäß Anspruch 1, **dadurch gekennzeichnet, dass** der erste Block (17) aus zwei halben Blöcken (17a, 17b) besteht, von denen der eine mit einem Kopf (15) monolithisch ist und der andere mit dem anderen Kopf (16) monolithisch ist.

3. Die Spule gemäß Anspruch 1, **dadurch gekennzeichnet, dass** der zweite Block (22) auf einer niedrigeren Ebene endet als der erste Block (17) und der dritte Block (27).

4. Eine Abdeckung für eine Spule gemäß einem oder mehreren der obigen Ansprüche, **dadurch gekennzeichnet, dass** sie in einem zentralen Bereich ein Gehäuse (31) zur Aufnahme eines Steckers (32) vom RAST/2.5- und RAST/5-Typ hat, zur Verbindung, mit Hilfe männlicher Klemmen (32a), mit den Buchsensteckelementen des ersten Blocks (17), wobei die Abdeckung (30) den zweiten (22) und dritten Block (27) intern einschließt.

5. Die Abdeckung gemäß Anspruch 4, **dadurch gekennzeichnet, dass** die männlichen Klemmen (32a) parallel zu den Köpfen sind.

6. Die Abdeckung gemäß Anspruch 4 und 5, **dadurch gekennzeichnet, dass** das Gehäuse (31) des Steckers (32) im Verhältnis zur Anordnung der männlichen Klemmen (32a), die PIN-Klemmen (32a) sind, so angeordnet wird, dass die elektrische Verbindung so geführt wird, dass sie entlang der Breite (zwischen den am weitesten entfernten Rändern) jeder PIN-Klemme (32a) stattfindet.

7. Die Abdeckung gemäß Anspruch 4, **dadurch gekennzeichnet, dass** sie in einem zentralen Bereich ein Gehäuse (34) zur Aufnahme männlicher Klemmen (35) des RS-Typs zur Verbindung mit den Buchsensteckelementen (20) des ersten Blocks (17) hat, wobei seitlich ein Loch (36) für eine männliche Klemme (37) des RS-Typs zur Verbindung mit dem Buchsensteckelement (29) des dritten Blocks (27) bereitgestellt wird und der zweite Block (22) vollständig eingeschlossen ist.

8. Die Abdeckung gemäß Anspruch 7, **dadurch gekennzeichnet, dass** die männlichen Klemmen (35) parallel zu den Köpfen angeordnet sind.

## Revendications

1. Bobine pour enroulements électriques de moteurs, comprenant deux demi-bobines (10, 11) en plastique qui sont associées l'une à l'autre de façon opérative dans une configuration côte-à-côte, **caractérisée en ce que** au niveau du bord de deux têtes (13, 14) desdites demi-bobines (10, 11) qui sont agencées côte-à-côte, un premier (17), un deuxième (22) et un troisième (27) blocs font saillie; ledit premier bloc (17) étant dans une position centrale et présentant deux logements parallèles (18, 19) pour des éléments de connexion électriques femelles respectifs (20), sur un côté dudit premier bloc (17) le deuxième bloc (22) étant prévu qui présentent deux logements côte-à-côte (23, 24) pour des éléments de connexion électriques femelles (25, 26) respectifs, sur l'autre côté dudit premier bloc (17) le troisième bloc (27) étant prévu qui présente un logement (28) pour un élément de connexion électrique femelle (29).

2. Bobine selon la revendication 1, **caractérisée en ce que** ledit premier bloc (17) est composé de deux demi-blocs (17a, 17b), l'un desquels est monolithique avec une tête (15) et l'autre est monolithique avec l'autre tête (16).

3. Bobine selon la revendication 1, **caractérisée en ce que** ledit deuxième bloc (22) se termine au niveau d'un niveau plus bas que le premier bloc (17) et le troisième bloc (27).

4. Couverture pour une bobine selon une ou plusieurs des revendications précédentes, **caractérisée en ce qu'**elle présente, dans une région centrale, une coquille (31) pour loger un connecteur mâle (32) du type RAST/2,5 et RAST/5 pour la connexion, au moyen de terminaux mâles (32a), aux éléments femelles dudit premier bloc (17), ladite couverture (30) enfermant intérieurement lesdits deuxième (22) et troisième (27) blocs.

5. Couverture selon la revendication 4, **caractérisée en ce que** lesdits terminaux mâles (32a) sont parallèles auxdites têtes.

6. Couverture selon les revendications 4 et 5, **caractérisée en ce que** la coquille (31) dudit connecteur mâle (32) est agencée, par rapport à l'agencement desdits terminaux mâles (32a), étant des terminaux PIN (32a), de sorte à guider la connexion électrique de sorte à survenir le long de la largeur (entre les bords les plus loins) de chaque terminal PIN (32a).

7. Couverture selon la revendication 4, **caractérisée en ce qu'**elle présente, dans une région centrale, une coquille (34) pour loger des terminaux mâles (35) du type RS pour la connexion aux éléments femelles (20) du premier bloc (17), un trou (36) étant prévu latéralement pour un terminal mâle (37) du type RS pour la connexion au terminal femelle (29) du troisième bloc (27), ledit deuxième bloc (22) étant complètement enfermé.

8. Couverture selon la revendication 7, **caractérisée en ce que** lesdits terminaux mâles (35) sont agencés parallèles auxdites têtes.
